# EUROPÄISCHE PATENTANMELDUNG

(11) **EP 0 933 661 A2**
(43) Veröffentlichungstag der Anmeldung: **04.08.1999**
(21) Anmeldenummer: 99108311.4
(22) Anmeldetag: 20.12.1996
(51) Int. Cl.: G02B 6/42

(54) **Vorrichtung zum Fixieren und Positionieren eines Lichtleiterfaserendes und Verwendung**

(30) Priorität: 22.12.1995 DE 19548502; 18.10.1996 EP 96116751
(62) Teilanmeldung aus: 96940694.1
(71) Anmelder: THE WHITAKER CORPORATION, Wilmington, Delaware 19808 (US)
(72) Erfinder: Hultermans, Antonius Petrus Cornelius Maria, 5032 CL Tilburg (NL); Vergeest, Henricus Josef, 5213 XH 's-Hertogenbosch (NL); Weber, Klaus, 64625 Bensheim (DE)
(74) Vertreter: Heinz-Schäfer, Marion

(57) **Zusammenfassung**

Es wird eine Vorrichtung zum Fixieren und Positionieren eines Lichtleitfaserendes (1), das in einer Hülse (7) gefasst ist, relativ zu einem optoelektronischen Sende- oder Empfangselement angegeben, mit einem Gehäuse (80), das einen hohlzylindrischen Körper (3 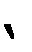 ) aufweist, in den die Hülse (7) koaxial einbringbar ist und der an einem Ende einen Anschlag (4 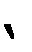 ) mit einer koaxialen Bohrung (5 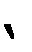 ) aufweist, wobei das Gehäuse eine koaxial dem hohlzylindrischen Körper gegenüberliegende Öffnung aufweist, mit einer Kugellinsenhalterung (120), die in axialer Richtung in die Öffnung einbringbar und justierbar ist und mittels Pressitz gehaltert wird und mit einer Halterung (121) für das optoelektronische Element, die relative zu Kugellinsenhalterung vor Befestigung an dieser in radialer Richtung justierbar ist. Weiter wird ein Herstellungsverfahren zur Herstellung der Vorrichtung angegeben.

## Beschreibung

Die Erfindung betrifft eine Vorrichtung zum Fixieren und Positionieren eines Lichtleitfaserendes das in einer Hülse gefasst ist, relativ zu einem optoelektronischen Sende- oder Empfangselement.

Die Erfindung betrifft weiter ein Verfahren zur Herstellung einer Vorrichtung zum Fixieren und Positionieren eines Lichtleitfaserendes, das in einer Hülse gefasst ist, relativ zu einem optoelektronischen Sende- oder Empfangselement.

In optischen Übertragungssystemen ist es bekannt, Lichtleitfaserenden an optoelektronische Elemente anzukoppeln. Dabei ist es vielfach nötig, dass das Lichtleitfaserende in Bezug auf die aktive Fläche des optoelektronischen Sende- oder Empfangselementes einjustiert wird. Da Rückreflexionen von Licht in das optoelektronische Element vermieden werden sollen, insbesondere bei der Ankopplung einer Lichtleitfaser an einen Laser, ist es bekannt, die Stirnfläche des Lichtleitfaserendes abzuschrägen. Durch die Neigung der Stirnfläche ist die Reflexion von aus dem Laser austretenden Licht an der Stirnfläche der Lichtleitfaser zurück in den Laser nicht mehr möglich.

Weiter ist es bekannt Lichtleitfaserenden in Hülsen, auch Stecker- oder Steckverbinderstifte genannt, zu fassen. Diese Hülsen sind entweder aus Keramik oder aus Metall hergestellt, sind sehr genau gearbeitet und gewährleisten die koaxiale Lage des Lichtwellenleiterendes zu ihrer Zylinderachse.

Aus der EP 542 011 A1 ist eine optische Sende- und Empfangsanordnung bekannt, bei der ein Stecker mit einem schräg ausgeschliffenen Lichtwellenleiterende relativ zu einem optisch aktiven Element justierbar angeordnet ist. Der Stecker mit dem Lichtwellenleiterende wird dazu in eine Steckerhalterung in Form eines hohlzylindrischen Körpers mit einem Anschlag an einem Ende eingebracht. Der Anschlag weist eine koaxiale Bohrung auf.

Es ist Aufgabe der Erfindung eine Vorrichtung zum Fixieren und Positionieren eines in einer Hülse gefassten Lichtleitfaserendes und ein Herstellungsverfahren anzugeben, die sowohl eine axiale als auch eine radiale Positionierung eines Lichtleitfaserendes zu einem optoelektrischen Element.

Die Aufgabe wird in Bezug auf die Vorrichtung mit einer Vorrichtung mit den Merkmalen des Patentanspruches 1 gelöst. Vorteilhafte Weiterbildungen der Vorrichtung sind in den Unteransprüchen 2 bis 3 angegeben. In Bezug auf das Verfahren wird die Aufgabe durch das Verfahren nach Patentanspruch 4 gelöst. Vorteilhafte Weiterbildungen sind in den entsprechenden Unteransprüchen angegeben.

Die erfindungsgemässe Vorrichtung wird zur Positionierung von Lichtleitfaserenden relativ zu optoelektronischen Sende- oder Empfangselementen eingesetzt. Dazu ist der hohlzylindrische Körper Teil eines Gehäuses, in das das optoelektronische Bauelement aufgenommen ist. Das optoelektronische Bauelement ist gegenüber der Bohrung fest positioniert oder justierbar angebracht. Gehäuse, hohlzylindrischer Körper und Anschlag können sowohl einteilig als auch als mehrere miteinander verbundene Teile aus ausgeführt sein. Durch die Einführung einer gefassten Lichtleitfaser in den hohlzylindrischen Körper ist dann gewährleistet, dass diese gegenüber dem optoelektronischen Bauelement genau positioniert ist. Es ist auch möglich eine aktive Justierung des optoelektronischen Bauelementes vorzunehmen.

Um eine möglichst genaue Positionierung zu erreichen, sollte ein Anschlagen von Hülse und Anschlag möglichst nahe an der Faser erfolgen. Dies kann dadurch erreicht werden, dass die lichte Weite der Bohrung nur geringfügig grösser als der Durchmesser der Faser ist.

Es ist im Stand der Technik bekannt, die Stirnflächen von Lichtleitfasern ballig zu schleifen. Dies kann auch in Kombination mit einer schrägen Stirnfläche erfolgen. Die erfindungsgemässe Anordnung ist dazu geeignet auch eine so bearbeitete Faser axial auszurichten. Dabei kann auch der geneigte Bereich der Stirnfläche der Hülse leicht ballig geschliffen sein.

Mit der Erfindung wird eine hochpräzise Positionierung in Längsrichtung erreicht. Diese muss beispielsweise bei der Verbindung einer Lichtleitfaser mit einem Laser sehr genau sein, da das vom Laser emittierte Licht auf die Stirnfläche der Lichtleitfaser fokussiert sein muss, um einen hohen Einkopplungswirkungsgrad zu erreichen. Ein Problem ist, dass die Stirnfläche der Hülse etliche Toleranzen beinhaltet, wie Änderungen im Verrundungsradius einer balligen Stirnfläche, Toleranzen im Schrägwinkel, Toleranzen im Durchmesser des geneigten Bereiches. Der Einfluss der Toleranzen wird durch die Erfindung minimiert.

Durch eine erfindungsgemässe Anordnung ist es möglich, ein Lichtleitfaserende mit einer abgeschrägten Stirnfläche auch in axialer Richtung definiert zu Positionieren. Dabei dient beispielsweise ein kegelförmig ausgestalteter Anschlag als Anschlag für den abgeschrägten Bereich der Stirnfläche der Hülse, in der das Lichtleitfaserende gefasst ist. Eine seitliche Führung im hohlzylindrischen Körper wird dadurch erreicht, dass der hohlzylindrische Körper beziehungsweise die Hülse, in der die Lichtleitfaser gefasst ist, in ihrem Aussendurchmesser beziehungsweise in ihrer lichten Weite aufeinander abgestimmt sind. Eine sehr genaue Öffnung im hohlzylindrischen Körper kann beispielsweise dadurch erreicht werden, dass der hohlzylindrische Körper auf der Innenseite ein Keramikrohr aufweist oder vollständig aus Keramik hergestellt ist.

Es ist besonders wichtig, dass der Anschlag aus einem harten Material hergestellt ist, um einer Abnutzung durch das mehrfache Einbringen von in Hülsen gefassten Fasern entgegenzuwirken. Die Anordnung ist insbesondere dazu geeignet, dass auch bei mehrfachem Austauschen der in Hülsen gefassten Fasern für alle Fasern eine genaue Justierung und Positionierung erreicht wird. Eine Abnutzung des kegelförmigen Anschlages wird auch dadurch vermieden, dass der Winkel zwischen dem Mantel des kegelförmigen Anschlages und der Kegelachse dem spitzen Winkel zwischen dem geneigten Bereich und der Achse der Hülse entspricht.

Durch eine erfindungsgemässe Anordnung ist es auch möglich, ein Lichtleitfaserende mit einer abgeschrägten oder mit einer senkrecht zur optischen Achse verlaufenden Stirnfläche in axialer Richtung definiert zu positionieren. Durch die besondere Ausgestaltung des Anschlages mit einer abgeschrägten Teilebene und einer senkrecht zur optischen Achse verlaufenden Teilebene ist es möglich mit einer einzigen Anordnung sowohl geneigte Lichtwellenleiterenden, als auch senkrecht zur optischen Achse verlaufende Lichtwellenleiterenden definiert zu kontaktieren. Es ist besonders vorteilhaft, dass dies mit einer einzigen Einrichtung erfolgen kann.

Die Herstellung eines solchen besonders ausgebildeten Anschlages kann erfolgen, indem aus einer Ebene eine Vertiefung herausgefräst wird, wodurch die geneigte Teilebene geschaffen wird. Es ist insbesondere sinnvoll, den Anschlag in zwei Hälften zu teilen, wobei die eine Hälfte der einen Teilebene und die zweite der zweiten Teilebene entspricht. Die Grenzlinie der Hälften verläuft entsprechend durch die optische Achse.

Ausführungsbeispiele der Erfindung werden anhand der Zeichnungen erläutert. Es zeigen:
Figur 1 eine schematische Darstellung einer Vorrichtung zur Positionierung eines Lichtleitfaserendes,
Figur 2 eine Anordnung zur Verwendung der erfindungsgemässen Vorrichtung nach Figur 1,
Figur 3 eine schematische Darstellung einer Vorrichtung zur Ankopplung eines Lichtleitfaserendes dessen Stirnfläche abgeschrägt ist,
Figur 4 eine schematische Darstellung derselben Vorrichtung mit einem Lichtwellenleiterende dessen Stirnfläche senkrecht zur optischen Achse verläuft,
Figur 5 eine Anordnung zur Verwendung der Vorrichtung nach den Figuren 3 und 4, wobei der Träger für das optoelektronische Bauelement und die Linse noch nicht eingebracht sind,
Figur 6 die Anordnung nach Figur 5 im zusammengefügten Zustand und
Figur 7 eine Aufsicht auf das in den Figuren 5 und 6 dargestellte Gehäuse.

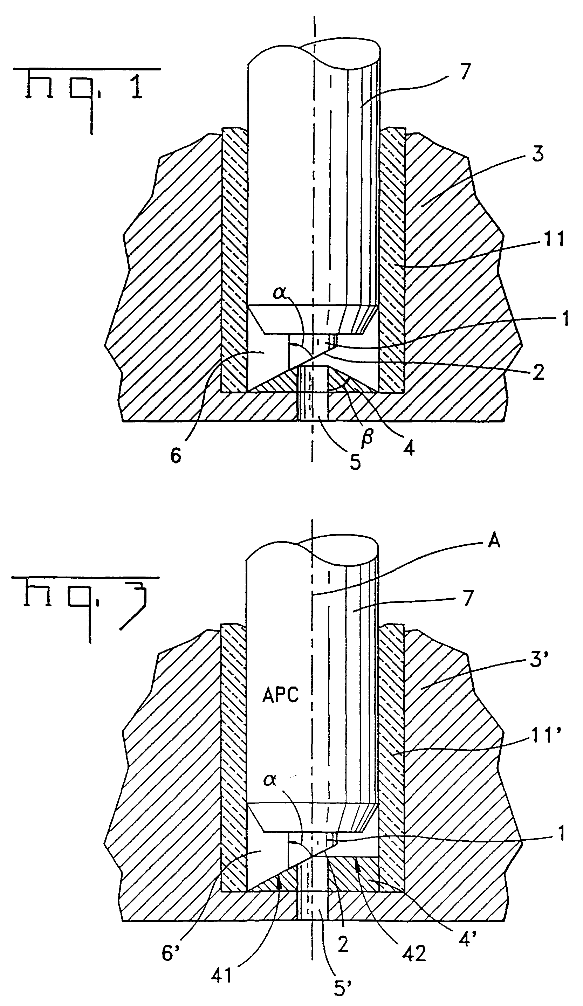

In Figur 1 ist eine Vorrichtung mit einer Hülse 7, in der ein Lichtleitfaserende gefasst ist, dargestellt. Das Lichtleitfaserende weist eine abgeschrägte Stirnfläche auf. Die Hülse 7 weist an dem Ende mit der Stirnfläche des Lichtleitfaserendes einen Stift 1 auf, von kleinerem Durchmesser als die Hülse 7. Die Stirnfläche der Hülse 7 weist also eine Stufe auf, wobei der Stift 1 in einem abgeschrägten Bereich 2 endet. Der abgeschrägte Bereich 2 verläuft koplanar mit der abgeschrägten Stirnfläche des Lichtleitfaserendes. Die Stirnfläche ist gegenüber der Achse des Lichtleitfaserendes beziehungsweise der Hülse, also der optischen Achse, um einen Winkel α geneigt. Es ist beispielsweise auch möglich, dass der abgeschrägte Bereich 2 und die Stirnfläche der Lichtleitfaser zusätzlich zur Neigung ballig ausgebildet sind, also nach aussen gewölbt sind.

Eine weitere mögliche Ausführung besteht darin, dass die gesamte Stirnfläche der Hülse geneigt ist, also keine zusätzliche Stufe aufweist. Sie kann auch leicht ballig ausgeführt sein.

Die Hülse 7 kann beispielsweise metallisch oder aus Keramik sein. Das Lichtleitfaserende ist mit der Hülse 7 in einen hohlzylindrischen Körper 3 koaxial zur Achse dieses hohlzylindrischen Körpers einbringbar. Der hohlzylindrische Körper 3 kann im Inneren ein Rohr, beispielsweise ein Keramikrohr 11, aufweisen. Ein solches Rohr ist mit einem sehr präzisen Innendurchmesser herstellbar, derart, dass eine hochpräzise Führung der Hülse 7 im zylindrischen Körper 3 erreicht wird. Der zylindrische Körper 3 weist an einem Ende einen Anschlag 4 auf. Dieser Anschlag 4 kann Teil des zylindrischen Körpers 3 oder auch ein separates Teil sein. Er weist eine Bohrung 5 auf, die koaxial zur Achse des hohlzylindrischen Körpers 3 verläuft. Der Anschlag 4 ist zum Inneren 6 des hohlzylindrischen Körpers 3 hin kegelförmig ausgestaltet, wobei die Kegelachse mit der Achse der Bohrung 5 zusammenfällt. Es ist besonders vorteilhaft, wenn der Winkel zwischen dem Kegelmantel und der Kegelachse β dem Winkel α zwischen der Stirnfläche und der Achse des Lichtleitfaserendes entspricht.

Durch die in Figur 1 dargestellte Anordnung ist es möglich,
eine abgeschrägte und eventuell ballig geschliffene Lichtleitfaser in einer bestimmten Entfernung zu einem bestimmten Punkt auf der Achse des hohlzylindrischen Körpers zu justieren. Der geneigte Bereich 2 der Stirnfläche der Hülse 7 schlägt gegen den Kegelmantel des Anschlags 4 an. Der Durchmesser der Bohrung 5 ist darum kleiner als der Aussendurchmesser des Stiftes. Die lichte Weite der Bohrung 5 sollte grösser als der Durchmesser der Lichtleitfaser sein, um die Stirnfläche der Faser nicht zu beschädigen. Um eine hohe Genauigkeit zu erreichen, ist es sinnvoll, den Berührungspunkt von Anschlag und geneigtem Bereich möglichst nahe an der Faser vorzusehen.

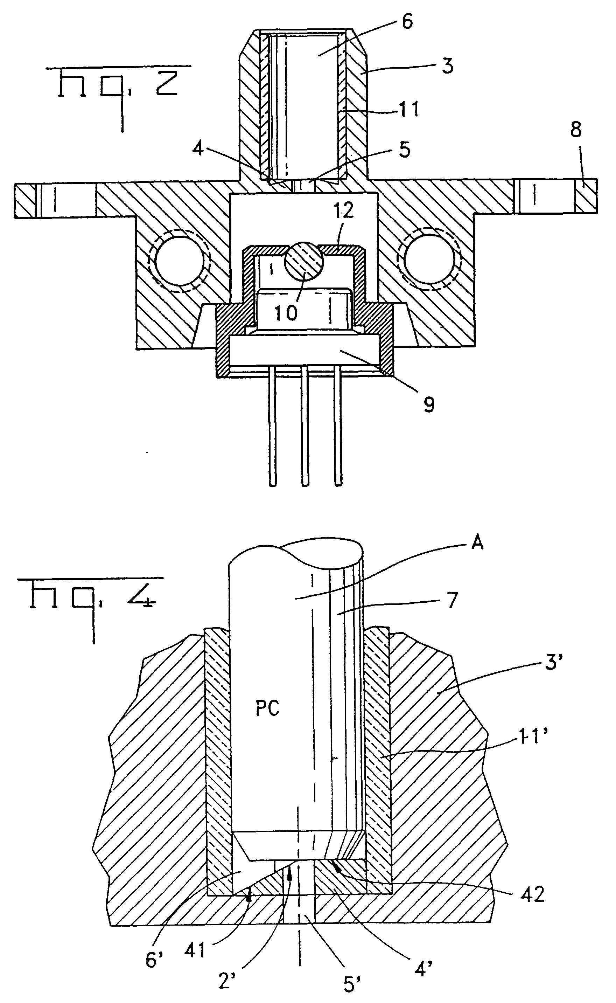

In Figur 2 ist eine Verwendung der in Figur 1 dargestellten Anordnung dargestellt. Der hohlzylindrische Körper 3 ist Teil eines metallischen Gehäuses 8, das zusätzlich eine Aufnahme für ein optoelektronisches Sende- oder Empfangselement und ein zusätzliches optisches Element aufweist. Das optische Element ist in diesem Fall eine Kugellinse 10, die in Bezug auf die Achse des hohlzylindrischen Körpers fixiert ist. Es ist eine Linsenhalterung vorgesehen, in der das optoelektronische Sende- oder Empfangselement, beispielsweise ein Laser 9, fixiert ist. Durch die genaue Fixierung von hohlzylindrischem Körper 3 zu optoelektronischem Element 9 und Kugellinse 10, ist eine genaue Positionierung des Lichtleitfaserendes, das in den zylindrischen Körper einfügbar ist, in axialer und radialer Richtung relativ zu dem Laser 9 gewährleistet.

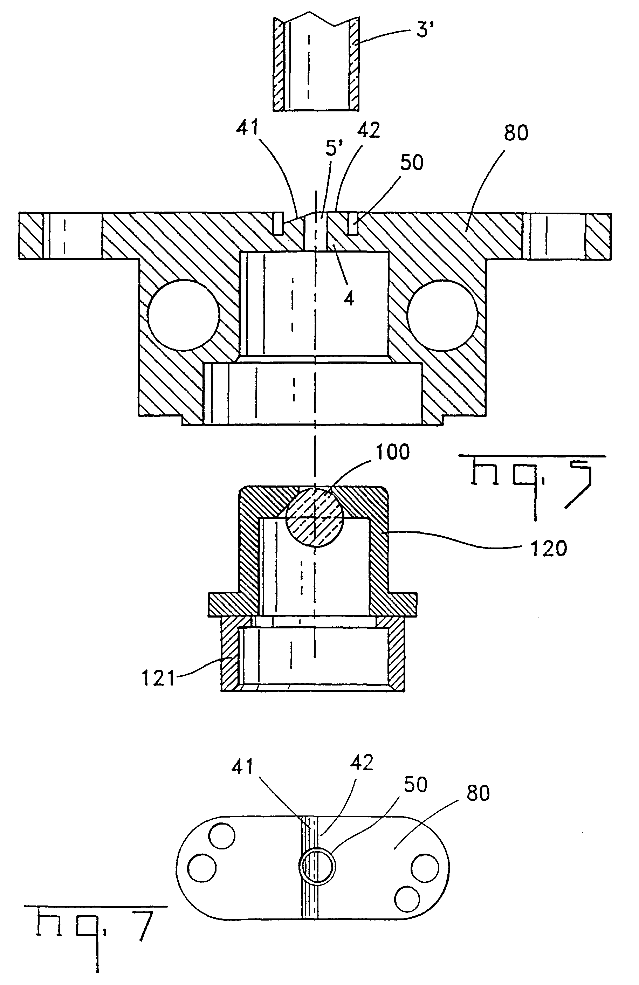

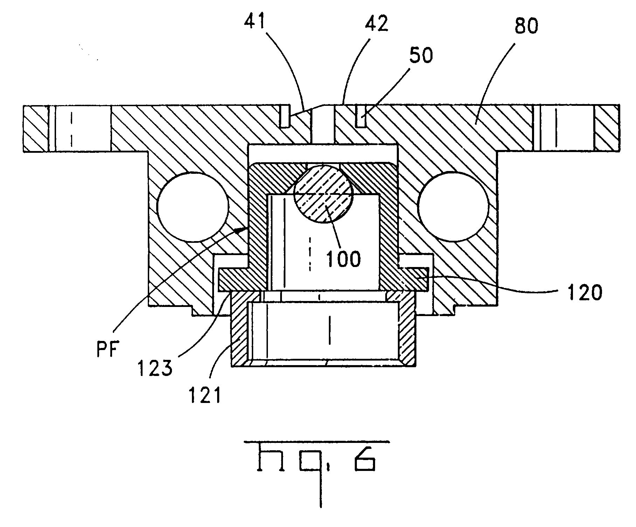

In den Figuren 3 und 4 ist jeweils eine Vorrichtung dargestellt. In Figur 3 ist in diese Vorrichtung ein Lichtwellenleiter eingebracht ist, der in einer Hülse 7 gefasst ist und dessen Ende 2 geneigt zur optischen Achse verläuft. Die Hülse 7 weist an ihrem Ende einen Stift 1 mit geringerem Durchmesser auf, dessen Stirnfläche geneigt verläuft. Der abgeschrägte Bereich 2 verläuft koplanar mit der abgeschrägten Stirnflache des Lichtleitfaserendes. Die Vorrichtung zum Positionieren weist einen zylindrischen Körper 3' auf. Das Lichtleitfaserende mit der Hülse ist in diesen hohlzylindrischen Körper 3' koaxial zur Achse des hohlzylindrischen Körpers 3' einbringbar. Der hohlzylindrische Körper 3' weist im Inneren ein Rohr, beispielsweise ein Keramikrohr 11' auf. An seinem Ende weist der zylindrische Körper 3' einen Anschlag 4' auf. In der Darstellung ist der Anschlag 4' als separates Teil ausgebildet, er kann aber auch Teil des zylindrischen Körpers 3' sein. Der Anschlag 4' weist eine Bohrung 5' auf, die koaxial zur Achse des hohlzylindrischen Körpers 3' verläuft. Der Anschlag 4' ist wie folgt ausgestaltet: Er besteht im Wesentlichen aus zwei Bereichen, wobei die Teilung der beiden Bereiche durch die optische Achse A verläuft. Der eine Bereich weist als Oberfläche eine Teilebene 42 auf, die senkrecht zur optischen Achse ausgerichtet ist, während der zweite Bereich eine Teilebene 41 aufweist, die entsprechend dem Winkel der Stirnfläche des Lichtleitfaserendes geneigt ist. Diese in Figur 3 dargestellte Vorrichtung zum Fixieren und Positionieren eines Lichtleitfaserendes ist besonders vorteilhaft, da sie sowohl zur Aufnahme eines geneigten Lichtleitfaserendes, als auch zur Aufnahme eines Lichtleitfaserendes, dessen Stirnfläche senkrecht zur optischen Achse A orientiert ist, geeignet ist.

In Figur 4 ist die in Figur 3 dargestellte Vorrichtung nochmals dargestellt, jedoch ist ein Lichtleitfaserende, das in einer Hülse 7' gefasst ist, dargestellt, dessen Stirnfläche senkrecht zur optischen Achse A verläuft.

Neben dem Vorteil, dass sowohl Lichtwellenleiter mit geneigten als auch mit senkrecht zur optischen Achse orientierten Endflächen eingebracht werden können, weist die Anordnung weiter den Vorteil auf, dass ein Lichtleitfaserende mit einer geneigten Stirnfläche nur in einer Orientierung in die Vorrichtung einbringbar ist. Dies ist aus dem Grunde von Vorteil, dass dadurch sichergestellt werden kann, dass eine reproduzierbare Ankopplung erfolgen kann.

In den Figuren 5 bis 7 ist nun eine erfindungsgemässe Ausführung einer Anordnung gemäss den Figuren 3 und 4 dargestellt. Es ist die Verwendung einer Anordnung zur Ankopplung eines Lichtwellenleiterendes an ein optoelektronisches Sende- oder Empfangselement dargestellt. Es ist ein Gehäuse 80 vorgesehen, das die Bohrung 5' und den Anschlag 4 aufweist, sowie eine Öffnung zur Aufnahme einer Linsenhalterung 120, und einer Haltung 121 für das optoelektronische Sende- oder Empfangselement. Der hohlzylindrische Körper 3' besteht beispielsweise aus einem keramischen Rohr, dass in eine entsprechende Nut 50 im Gehäuse 80 eingebracht wird. Wie in Figur 7 aus der Aufsicht zu erkennen, ist die Oberfläche des Gehäuses 80 bereichsweise mit einer im Querschnitt dreieckigen Nut versehen, durch die die zur optischen Achse geneigte Teilebene 41 gebildet wird. Der Bereich innerhalb der Nut 50, der als Anschlag dient, wird teilweise von der Teilebene 41 und teilweise von der Teilebene 42 gebildet. Dadurch entsteht die auch bereits in den Figuren 3 und 4 diskutierte Anordnung. Die Kugellinse befindet sich in der Kugellinsenhalterung 120, die in eine entsprechende zylindrische Öffnung des Gehäuses 80 einbringbar ist. Eine Befestigung der Kugellinsenhalterung 120 im Gehäuse 80 erfolgt durch einen Pressitz, wie er in der Figur 6 durch den Pfeil mit der Bezeichnung PF angedeutet ist. Dadurch ist es möglich, die Kugellinse in ihrer longitudinalen Position zur Endfläche des Lichtwellenleiters zu justieren. Das optoelektronische Element ist an einer weiteren Halterung 121 befestigt, die relativ zur Halterung der Kugellinse 120 in den Richtungen senkrecht zur optischen Achse bewegt werden kann. Eine Fixierung der beiden Halterungen zueinander, kann beispielsweise durch einen UV aushärtbaren Kleber 123 erfolgen. Es ist dabei von Vorteil, dass eine solche Justierung aktiv erfolgen kann. Nachdem die Fixierung mit dem UV aushärtbaren Kleber 123 erfolgt ist, ist es möglich, die beiden Halterungen 120 und 121 im Gehäuse 80 komplett zu vergiessen, indem die Zwischenräume mit einem entsprechendem Klebstoff oder einer entsprechenden Masse ausgefüllt werden.

Durch die in den Figuren 5 bis 7 angegebene Anordnung ist es möglich, eine aktive Fixierung in allen drei möglichen Achsen zwischen Lichtwellenleiterende und optoelektronischem Bauelement durchzuführen.

## Patentansprüche

1. Vorrichtung zum Fixieren und Positionieren eines Lichtleitfaserende (1), das in einer Hülse (7) gefasst ist, relativ zu einem optoelektronischen Sende- oder Empfangselement, mit einem Gehäuse (80), das einen hohlzylindrischen Körper (3 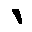 ) aufweist, in den die Hülse (7) koaxial einbringbar ist und der an einem Ende einen Anschlag (4 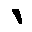 ) mit einer koaxialen Bohrung (5 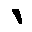 ) aufweist, wobei das Gehäuse eine koaxiale, dem hohlzylindrischen Körper gegenüberliegende Öffnung aufweist, mit einer Kugellinsenhalterung (120), die in axialer Richtung in die Öffnung einbringbar und justierbar ist und mittels Pressitz gehaltert ist und mit einer Halterung (121) für das optoelektronische Element, die relativ zur Kugellinsenhalterung vor Befestigung an dieser in radialer Richtung justierbar ist.

2. Vorrichtung zum Fixieren und Positionieren eines Lichtleitfaserendes (1) nach Anspruch 1, dadurch gekennzeichnet, dass die Halterung (121) an der Kugellinsenhalterung (120) mittels einem UV-aushärtbaren Kleber (123) befestigt ist.

3. Vorrichtung zum Fixieren und Positionieren eines Lichtleitfaserendes nach einem der Ansprüche 1 oder 2, dadurch gekennzeichnet, dass die Zwischenräume in der zylindrischen Öffnung des Gehäuses (80) zwischen dem Gehäuse (80) und der Kugellinsenhalterung (120) sowie der Halterung (121) mit einer Vergussmasse ausgefüllt.

4. Verfahren zur Herstellung einer Vorrichtung zum Fixieren und Positionieren eines Lichtleitfaserendes (1), das in einer Hülse (7) gefasst ist, relativ zu einem optoelektronischen Sende- oder Empfangselement, mit einem Gehäuse (80), das einen hohlzylindrischen Körper (3 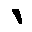 ) aufweist, in den die Hülse (7) koaxial einbringbar ist und der an einem Ende einen Anschlag (4 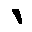 ) mit einer koaxialen Bohrung (5 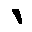 ) aufweist mit folgenden Schritten:
eine Kugellinsenhalterung wird in axialer Richtung in eine koaxiale, dem hohlzylindrischen Körper gegenüberliegende Öffnung des Gehäuses (80) eingebracht und in axialer Richtung justiert,
eine Halterung (121) für das optoelektronische Element wird relativ zur Halterung der Kugellinse (120) in den Richtungen senkrecht zur optischen Achse justiert und an der Kugellinsenhalterung (120) fixiert.

5. Verfahren nach Anspruch 4, dadurch gekennzeichnet, dass die Kugellinsenhalterung (120) mittels Pressitz in der Öffnung des Gehäuses (80) gehaltert wird.

6. Verfahren nach einem der Ansprüche 4 oder 5, dadurch gekennzeichnet, dass die Zwischenräume zwischen dem Gehäuse (80) und den beiden Halterungen (120, 121) mit einer Vergussmasse ausgegossen werden.

7. Verfahren nach einem der Ansprüche 4-6, dadurch gekennzeichnet, dass die Justierungen der Kugellinsenhalterung (120) und der Halterung (121) für das optische Element aktiv erfolgen.
